(19) Europäisches Patentamt / European Patent Office / Office européen des brevets

(11) **EP 3 652 872 B1**

(12) **EUROPÄISCHE PATENTSCHRIFT**

(45) Veröffentlichungstag und Bekanntmachung des Hinweises auf die Patenterteilung:
**23.08.2023 Patentblatt 2023/34**

(21) Anmeldenummer: **18736942.6**

(22) Anmeldetag: **11.07.2018**

(51) Internationale Patentklassifikation (IPC):
**H04L 65/65** *(2022.01)*

(52) Gemeinsame Patentklassifikation (CPC):
**H04L 65/65**

(86) Internationale Anmeldenummer:
**PCT/EP2018/068781**

(87) Internationale Veröffentlichungsnummer:
**WO 2019/011981 (17.01.2019 Gazette 2019/03)**

(54) **VERFAHREN UND EINRICHTUNG ZUM ABLEITEN VON AUDIOPARAMETERWERTEN AUS EINEM AES67 KOMPATIBLEN AUDIOINFORMATIONSSIGNAL**

METHOD AND DEVICE FOR DERIVING AUDIO PARAMETER VALUES FROM AN AES67-COMPATIBLE AUDIO INFORMATION SIGNAL

PROCÉDÉ ET DISPOSITIF DE DÉTERMINATION DE VALEURS DE PARAMÈTRES AUDIO À PARTIR D'UN SIGNAL D'INFORMATIONS AUDIO COMPATIBLE AES 67

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **11.07.2017 IT 201700078297**

(43) Veröffentlichungstag der Anmeldung:
**20.05.2020 Patentblatt 2020/21**

(73) Patentinhaber: **Institut für Rundfunktechnik GmbH**
**80335 München (DE)**

(72) Erfinder:
• **BAUMANN, Franz**
**84036 Landshut (DE)**
• **RENJEWSKI, Felix**
**85586 Poing (DE)**

(74) Vertreter: **Koplin, Moritz**
**Anne-Conway-Straße 1**
**28359 Bremen (DE)**

(56) Entgegenhaltungen:
• **SCHMIDT FLORIAN ET AL: "A heuristic header error recovery scheme for RTP", 2013 10TH ANNUAL CONFERENCE ON WIRELESS ON-DEMAND NETWORK SYSTEMS AND SERVICES (WONS), IEEE, 18. März 2013 (2013-03-18), Seiten 186-190, XP032476924, DOI: 10.1109/WONS.2013.6578345 ISBN: 978-1-4799-0747-2 [gefunden am 2013-08-12]**
• **REHA CIVANLAR M: "Protocols for real-time multimedia data transmission over the Internet", ACOUSTICS, SPEECH AND SIGNAL PROCESSING, 1998. PROCEEDINGS OF THE 1998 IEEE INTERNATIONAL CONFERENCE ON SEATTLE, WA, USA 12-15 MAY 1998, NEW YORK, NY, USA,IEEE, US, Bd. 6, 12. Mai 1998 (1998-05-12), Seiten 3809-3812, XP010279676, ISBN: 978-0-7803-4428-0**
• **SCHULZRINNE H ET AL: "RTP: A Transport Protocol for Real-Time Applications", NETWORK WORKING GROUP REQUEST FOR COMMENTS, XX, XX, Nr. 3550, 5. April 2004 (2004-04-05), Seiten 1-104, XP002356069,**

**Beschreibung**

Hintergrund der Erfindung

Die Erfindung bezieht sich auf ein Verfahren und eine Einrichtung zum Ableiten von Audioparameterwerten aus einem AES67 kompatiblen Audioinformationssignal. Ein derartiges Informationssignal, welches in dem AES67 Audio Standard spezifiziert ist, ist aus aufeinanderfolgenden IP-Paketen aufgebaut und wird als ein reiner Bitstream übertragen (audio over IP oder audio over ethernet).

Mit der Übertragung von Audioinformation über IP, wie es in AES67 standardisiert worden ist, in Live-IP-Produktionen, geht auch eine Umstellung von Leitungsvermittlern zu paketvermittelnden Netzen einher. Um eine fehlerfreie Funktion zu garantieren, ist es von besonderer Bedeutung, dass die Streams im Netzwerk richtig übertragen werden.

Aus SCHMIDT FLORIAN ET AL, "A heuristic header error recovery scheme for RTP", 2013 10TH ANNUAL CONFERENCE ON WIRELESS ON-DEMAND NETWORK SYSTEMS AND SERVICES (WONS), IEEE, doi:10.1109/WONS.2013.6578345, ISBN 978-1-4799-0747-2, (20130318), pages 186 - 190, (20130812), ist es bekannt, bei Audiostreams mit konstanter Samplingrate zur Erfassung fehlerhafter Pakete den Zeitstempel eines empfangenen Pakets mit einem erwarteten Zeitstempel zu vergleichen.

Kurzbeschreibung der Erfindung

Es ist die Aufgabe der Erfindung, die Datenübertragung im Netzwerk zu verbessern. Diese Aufgabe wird durch die Lehre bzw. den Gegenstand der unabhängigen Ansprüche gelöst. Bevorzugte Ausführungsformen sind in den abhängigen Ansprüchen enthalten.

Die Erfindung bezieht sich auf folgende Kenntnis.

Wenn das oben angegebene richtige Schalten der Streams im Netzwerk nicht realisiert wird, wäre der Fehler zu finden, wenn der Netzwerkadministrator die Eigenschaften des Informationssignals, welches über das Netzwerk empfangen wird, kennen würde.

Bis jetzt ist es jedoch dem Netzwerkadministrator nicht möglich, aus den Daten, die ihm vom Netzwerk bereitgestellt werden, Informationen über die Streams zu erhalten. Dies liegt daran, dass die IP-Pakete nur die Nutzdaten beinhalten und alle Konfigurationsdaten über einen anderen Kanal übertragen werden.

Die erfindungsgemäßen Maßnahmen ermöglichen dem Netzwerkadministrator trotzdem, aus den empfangenen IP-Paketen Audioparameterwerte, wie Abtastfrequenz und Anzahl der Audiokanäle, abzuleiten. Zuerst wird dazu die Anzahl von Abtastungen pro Kanal, welche in einem RTP Paket enthalten sind, abgeleitet.

Danach kann die Abtastfrequenz oder die Anzahl der Kanäle abgeleitet werden.

Kurzbeschreibung der Figuren

Die Erfindung wird in der Figurenbeschreibung näher erläutert. Darin zeigt

Fig. 1 eine Anlage, wobei eine Audioaufnahme einer Live-Produktion in einem AES67 kompatiblen Audioinformationssignal umgesetzt wird und über Internet an ein entferntes Verarbeitungsstudio übertragen wird und wobei eine Netzwerkadministrationseinheit zum Überwachen der über das Internet übertragenen Daten vorgesehen ist,
Fig. 2 den Aufbau einer "Multicast Session description" Datei,
Fig. 3 den Aufbau eines AES67 kompatiblen Audioinformationssignals,
Fig. 4 ein erstes Ausführungsbeispiel einer Einrichtung zum Ableiten von Audioparameterwerten aus dem AES67 kompatiblen Audioinformationssignal,
Fig. 5 den Aufbau eines UDP-Headers, und
Fig. 6 ein zweites Ausführungsbeispiel einer Einrichtung zum Ableiten von Audioparameterwerten aus dem AES67 kompatiblen Audioinformationssignal.

Detaillierte Figurenbeschreibung.

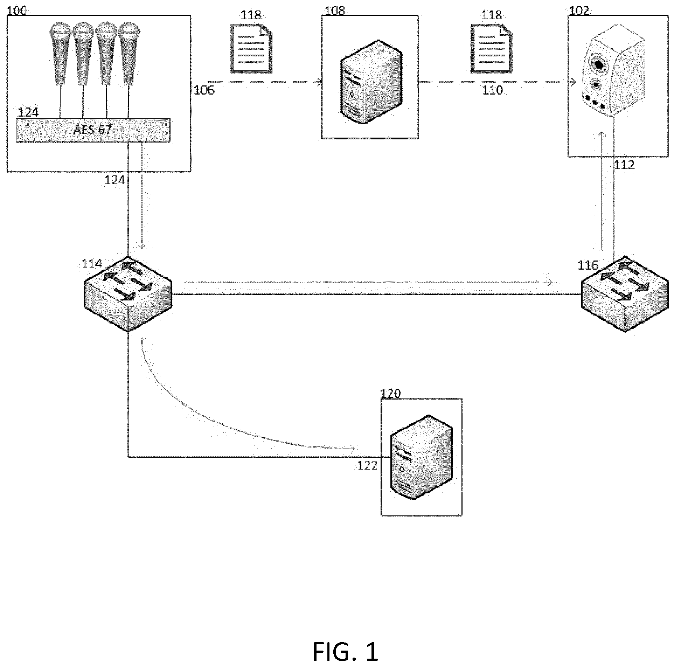

Fig. 1 zeigt ein Ausführungsbeispiel einer Anlage, wobei eine Audioaufnahme einer Live Produktion stattfindet, das aufgenommene Audioinformationssignal in einem AES67 kompatiblen Audioinformationssignal umgesetzt wird und danach über das Internet an ein entferntes Verarbeitungsstudio oder einen entfernten Tonregieraum übertragen wird.

Fig. 1 zeigt ein Aufnahmestudio, schematisch durch die Referenznummer 100 angedeutet, in dem eine Audioaufnahme einer Live-Produktion stattfindet. Ein Verarbeitungsstudio 104 ist vorgesehen, welches sich normalerweise entfernt von dem Aufnahmestudio befindet. Im Aufnahmestudio 100 wird in diesem Beispiel die Aufnahme mittels vier Mikrofone durchgeführt, die z.B. links vorne, rechts vorne, links hinten und rechts hinten im Aufnahmestudio positioniert sind. Das aufgenommene (hier vierkanälige) Audioinformationssignal wird in einer Umsetzungseinheit 124 in ein AES67 kompatibles Audioinformationssignal umgesetzt. Die Umsetzung findet dabei statt, und zwar gemäß den in der AES67 Standard Spezifikation (z.B. AES67-2015: AES standard for audio applications of networks - High performance streaming audio-over-IP interoperability) festgelegten Bedingungen in einem Übertragungssignal, welches über das Internet übertragen werden kann. An einem Ausgang 104, der mit dem Internet verbunden ist, steht das AES kompatible Audioinformationssignal zur Verfügung.

Das AES67 kompatible Audioinformationssignal ist aus aufeinanderfolgenden IP-Paketen aufgebaut, welche die Abtastungen des Audioinformationssignals in den (in diesem Beispiel: vier) Kanälen enthalten. Das AES67 kompatible Audioinformationssignal, wie es am Ausgang 104 zu Verfügung steht, enthält jedoch keine Information über die audiospezifische Parameterwerte des Audioinformationssignals, wie z. B. die Abtastfrequenz und die Anzahl der übertragenen Audiokanäle, die im zu übertragenen Audioinformationssignal enthalten sind. Die AES67-Spezifikation sieht dafür eine sogenannte "Multicast Session description" Datei 118 vor, in welcher Information über diese audiospezifischen Parameter enthalten sind. Die Datei wird an einem Ausgang 106 angeboten und über das Internet an einen Server 108 zugeführt und dort gespeichert.

Die Datei 118 enthält auch u. A. die Quelladresse des Aufnahmestudios 100, damit der Ausgang 104 über das Internet identifiziert werden kann.

Wenn ein Tontechniker im Tonregieraum 102 die Audioaufnahme des Liveprogramms zur weiteren Verarbeitung des Audioinformationssignals empfangen will, sodass es als Broadcastübertragungssignal einem oder mehreren Sendern angeboten werden kann, holt er sich über das Internet vom Server 108 die "Multicast Session description" Datei 118, siehe die Kommunikation über die Verbindung 110 zwischen Tonregieraum 102 und Server 108 in Fig. 1.

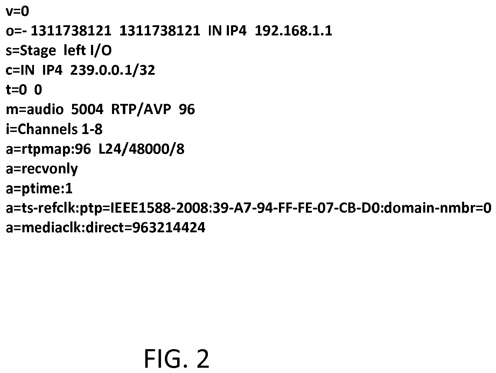

Fig. 2 zeigt ein Beispiel einer "Multicast Session description" Datei 118, wie es auch in Kapitel 8.5.1 der AES67-2015 Standard-Spezifikation beschrieben ist.

Parameter c in der Datei gibt die Quelladresse an (in diesem Beispiel IP4 239.0.0.1732), Parameter i die Anzahl der Audiokanäle (in diesem Beispiel gleich 8) und darunter ist die Abtastfrequenz (in diesem Beispiel 48 kHz) zu sehen.

Mit dieser Information kann der Tontechniker das AES67 kompatible Audioinformationssignal empfangen. Die Übertragung des AES67 kompatiblen Audioinformationssignals vom Ausgang 104 des Aufnahmestudios 100 zu einem Eingang 112 des Tonregieraums 102, über das Internet, findet in Fig. 1 über die Switches 114 und 116 statt.

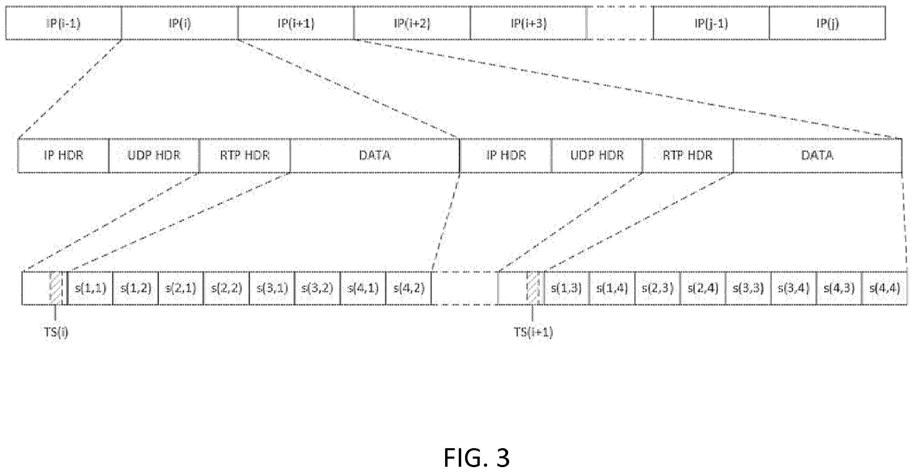

Fig. 3 zeigt den Aufbau eines AES67 kompatiblen Audioinformationssignals, das über das Internet und die Switches 114 und 116 an den Eingang 112 des Tonregieraums 102 angeboten wird. Das AES67 kompatible Audioinformationssignal ist aus aufeinanderfolgenden IP-Paketen ...... IP(i), IP(i+1), IP(i+2), ...... aufgebaut. Ein IP-Paket enthält einen IP-Header IP-HDR, einen UDP-Header UDP HDR, einen RTP-Header RTP HDR, und ein Datenfeld DATA. Das AES67 kompatible Audioinformationssignal kann jetzt an den Tonregieraum 102 übertragen und dort weiterverarbeitet werden.

Was möglicherweise trotzdem passieren kann, ist, dass eine fehlerbehaftete Übertragung von Daten zwischen dem Ausgang 104 des Aufnahmestudios 100 und dem Eingang 112 des Verarbeitungsstudios/Tonregieraums 102 auftreten kann.

Zum einen könnte der Tontechniker eine falsche 'Multicast Session description" Datei 118 vom Server 108 heruntergeladen haben. Oder es kann sein, dass keine Multicast Session description" Datei vorliegt.

Um derartige Übertragungsprobleme zu beseitigen, ist eine Netzwerkadministrationseinheit 120 zum Überwachen der über das Internet übertragenen Daten vorgesehen.

Dazu ist diese Netzwerkadministrationseinheit 120 in diesem Fall über den Switch 114 mit dem Netzwerk gekoppelt und eingerichtet, alle AES67 kompatiblen Informationssignale vom Aufnahmestudio 100 zu empfangen.

Dadurch, dass das AES67 kompatible Audioinformationssignal, wie oben bereits angegeben, keine Information über die audiospezifische Parameterwerten des Audioinformationssignals, wie z. B. die Abtastfrequenz und die Anzahl der übertragenen Audiokanälen die im zu übertragenen Audioinformationssignal enthalten sind, enthält, ist es für die Netzwerkadministrationseinheit 120 nicht möglich, diese audiospezifischen Parameterwerte direkt aus dem AES67 kompatiblen Audioinformationssignal abzuleiten.

Erfindungsgemäß werden jetzt einige Vorschläge beschrieben, die es ermöglichen, doch noch diese audiospezifischen Parameterwerte aus dem AES67 kompatiblen Audioinformationssignal abzuleiten.

Dazu wird zuerst aus dem AES67 kompatiblen Audioinformationssignal die Anzahl N von Abtastungen pro Kanal, welche im Datenfeld DATA eines IP-Pakets enthalten sind, abgeleitet. Dies wird wie folgt realisiert. In Fig. 3 ist ersichtlich, dass im RTP-Header des IP-Pakets IP(i) ein Timestampfeld TS(i) und im RTP-Header des IP-Pakets IP(i+1) ein Timestampfeld TS(i+1) vorhanden ist. Die Netzwerkadministrationseinheit 120 leitet die Timestampwerte TS(i) und TS(i+1) von diesen aufeinanderfolgenden IP-Paketen aus den RTP-Headern dieser Pakete ab. Danach wird durch Differenzbildung N abgeleitet: TS(i+1) - TS(i) = N. Als Beispiel: TS(i) = n und TS(i+1) = n+2. Dies bedeutet, dass im Datenfeld DATA der IP Pakete (n+2 - n =) zwei Abtastungen pro Kanal enthalten sind.

Eine andere Möglichkeit zum Ableiten der Anzahl N von Abtastungen pro Kanal, die in einem Datenfeld eines IP-Pakets enthalten sind, ist wie folgt. Jetzt werden aus den RTP-Headern der IP-Pakete IP(i) und IP(j) die Timestamps TS(i) und TS(j) abgeleitet. N wird jetzt wie folgt berechnet:

$$N = \{TS(j) - TS(i)\}/(p+1),$$

wobei p gleich die Anzahl der zwischen den zwei IP-Paketen (IP(i), IP(j)) in seriellen Datenstrom liegenden IP-Pakete ist, wobei p eine ganze Zahl grösser gleich Null ist.

Fig. 3 zeigt ein Beispiel des Inhalts des Datenfeldes des IP-Pakets IP(i). Darin sind zwei Abtastungen s(1,1), s(1,2) eines ersten Kanals enthalten, danach zwei Abtastungen s(2,1), s(2,2) eines zweiten Kanals, danach zwei Abtastungen s(3,1), s(3,2) eines dritten Kanals, und danach zwei Abtastungen s(4,1), s(4,2) eines vierten Kanals. Im Datenfeld DATA des IP-Pakets IP(i+1) sind dann auch wieder acht Abtastungen enthalten: zwei Abtastungen s(1,3), s(1,4) des ersten Kanals, danach zwei Abtastungen s(2,3), s(2,4) des zweiten Kanals, danach zwei Abtastungen s(3,3), s(3,4) des dritten Kanals, und danach zwei Abtastungen s(4,3), s(4,4) des vierten Kanals.

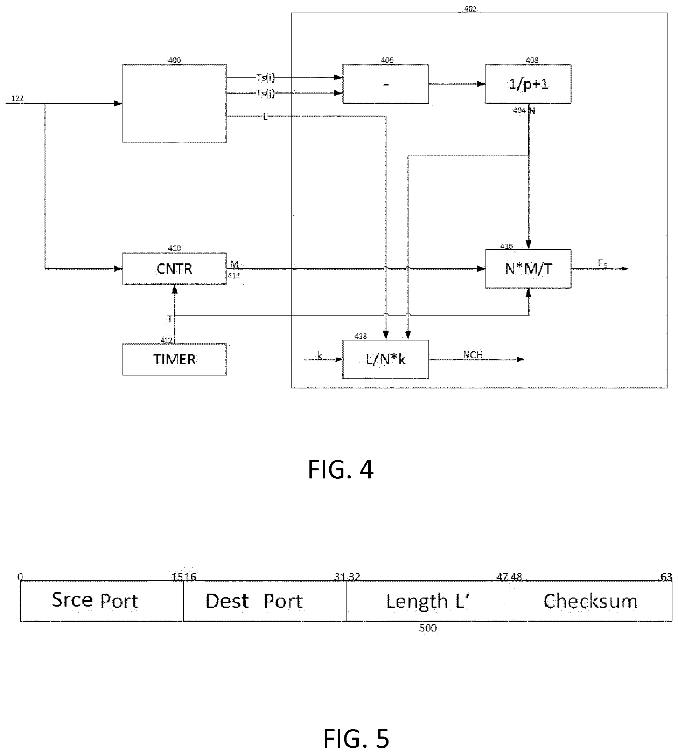

Zum Ableiten der Anzahl der Kanäle, die im AES67 kompatiblen Audioinformationssignal übertragen werden, wird aus dem UDP-Header UDP HDR einen Wert L', siehe Fig. 5, abgeleitet. Dieser Wert L' gibt die Länge des RTP-Pakets (ist gleich der Länge des RTP-Headers und des Datenfeldes DATA), ausgedrückt in Bytes, an. Weil die Länge des RTP-Headers RTP HDR standardgemäß festgelegt ist, ist somit auch die Länge L des Datenfeldes DATA aus L' abzuleiten. Jetzt ist die Anzahl der Kanäle zu berechnen durch: L/N', wobei N'= N·p, und p die Länge eines Abtastwerts ist, ausgedrückt in Anzahl von Bytes. p ist auch standardgemäß festgelegt und ist z. B. gleich 3 Bytes.

Zum Ableiten der Abtastfrequenz, wird bestimmt wieviel IP-Pakete M in einem bestimmten Zeitintervall T empfangen werden. Die Abtastfrequenz kann dann berechnet werden als gleich N M/T. M kann dabei auf verschiedenen Weisen abgeleitet werden. Erstens könnte M abgeleitet werden durch Zählen der Anzahl der IP-Pakete, die im bestimmten Zeitintervall empfangen werden. Zweitens könnte man auch die Reihennummer (sequence number) des ersten IP-Pakets und des letzten IP-Pakets, das im Zeitintervall empfangen wird, ableiten und dann durch Subtraktion der beiden Werten M berechnen. Diese Reihennummern sind im RTP-Header gespeichert.

Der Netzwerkadministrator kann dann diese gewünschte Information an den Tontechniker weiterleiten, damit das übertragene AES67 kompatible Audioinformationssignal empfangen und dekodiert werden kann. Weil der Netzwerkadministrator, wie oben bereits angegeben, alle Informationssignale vom Aufnahmestudio empfängt, kann der Netzwerkadministrator aus dem IP-Header des AES kompatiblen Audioinformationssignals auch die Quelladresse ableiten und an den Tontechniker weiterleiten.

Fig. 4 zeigt ein erstes Ausführungsbeispiel einer Einrichtung zum Ableiten von Audioparameterwerten aus dem AES67 kompatiblen Audioinformationssignal. Die Einrichtung enthält einen Eingang 122 zum Empfangen des AES67 kompatiblen Audioinformationssignals. Die Einrichtung ist versehen mit einer Ableitungseinheit 400 zum Ableiten von Information aus wenigstens zwei RTP-Headern von wenigstens zwei IP-Paketen im seriellen Datenstrom des AES67 kompatiblen Audioinformationssignals, in diesem Beispiel zum Ableiten von Timestamps TS(i) und TS(j), die an zwei Ausgängen abgegeben werden und an Eingängen einer Berechnungseinheit 402 zugeführt werden.

In der Berechnungseinheit 402 wird die Anzahl der Kanäle N gemäß folgender Formel berechnet:

$$N = \{TS(j) - TS(i)\}/(p+1)$$

wobei TS(i) und TS(j) gleich der Werte der zwei abgeleiteten Timestamps sind und p gleich der Anzahl der zwischen den zwei IP-Paketen (IP(i), IP(j)) im seriellen Datenstrom liegenden IP-Paketen ist, wobei p eine ganze Zahl grösser gleich Null ist.

Dies bedeutet, dass die Berechnungseinheit eine Subtraktionseinheit 406 enthält zum Subtrahieren der zwei Timestampwerte voneinander und eine Dividiereinheit 408 zum Dividieren des Ergebnisses der Subtraktionseinheit 406 durch p+1.

Der Wert N steht dann am Ausgang 404 der Dividiereinheit 404 zur Verfügung.

Zum Ableiten der Abtastfrequenz Fs enthält die Einrichtung eine Zähleinheit 410 und eine Timereinheit 412. Die Timereinheit 412 bestimmt ein Zeitintervall T, und die Zähleinheit zählt innerhalb dieses Zeitintervalls T die Anzahl M von IP-Paketen, die in diesem Zeitintervall T am Eingang 122 empfangen werden. Der Wert M steht am Ausgang 414 der Zählereinheit 410 zur Verfügung und wird an die Berechnungseinheit 402. Auch der Wert des Zeitintervalls T wird an die Berechnungseinheit 402 zugeführt. Die Berechnungseinheit 402 enthält eine Abtastfrequenzberechnungseinheit 416, die die Werte N, M und T empfängt und daraus die Abtastfrequenz Fs ableitet, gemäß der Formel: Fs = N·M/T.

Wie bereits oben angegeben, könnte die Einheit 410 stattdessen als eine Zählereinheit zum Auslesen der Folgenummer des ersten und letzten IP-Pakets eingerichtet sein, welches in diesem Zeitintervall T empfangen wird. Die Einheit könnte dann danach die zwei Folgenummern zum Ableiten des Werts M voneinander subtrahieren.

Die Ableitungseinheit 400 ist weiter eingerichtet, aus dem UDP-Header eine Länge L, ausgedrückt in Bytes des Datenfeldes des IP-Pakets, abzuleiten. Im Längenfeld 500 eines UDP-Headers ist ein Wert L' gespeichert, wie in Fig. 5 gezeigt. Dieser Wert L' stimmt mit der Länge des RTP-Pakets überein (also, der Länge des RTP-Headers RTP HDR und des Datenfeldes DATA, siehe Fig. 3). Da die Länge des RTP-Headers bekannt ist, kann somit die Länge L des Datenfeldes DATA abgeleitet werden. Dieser Wert L wird ebenfalls an die Berechnungseinheit 402 zugeführt. In der Berechnungseinheit 402 wird eine Berechnung im Block 418 ausgeführt, wobei die Anzahl der Kanäle NCH gemäß folgender Formel berechnet wird:

$$NCH = L/(N·k)$$

wobei k die Länge eines Abtastwerts ist, ausgedrückt in Anzahl der Bytes. Im AES67 Standard-Spezifikation ist angegeben, dass k gleich 3 sein kann.

Wie oben bereits erwähnt, kann diese Information an den Tontechniker weitergeleitet werden, damit er imstande ist, das übertragene AES kompatible Audioinformationssignal zu empfangen und zu dekodieren.

Fig. 5 zeigt einen UDP-Header, wie er in den IP-Paketen enthalten ist. Der UDP-Header besteht aus vier Feldern: eine 16-Bit Quelleadresse (SRCE PORT), eine 16-Bit Empfangsadresse (DEST PORT), das oben bereits beschriebene 16-Bit Längenfeld L' 500 und ein 16-Bit CHECKSUM Feld. Das CHECKSUM Feld ist dazu gedacht, Bitfehler im UDP-Header, im RTP-Header und im Datenfeld DATA zu finden und ggf. zu korrigieren. Bei anderen Protokollen wird dies dazu genutzt, ein fehlerhaft übertragenes Paket erneut anzufordern. Da dies jedoch bei UDP so nicht vorgesehen ist, wird das CHECKSUM-Feld häufig auf "null" gesetzt, was bedeutet, dass es nicht genutzt wird.

Erfindungsgemäß wird vorgeschlagen, das CHECKSUM Feld des UDP-Headers zur Übertragung von Informationsdaten zu einem Mediastream zu nutzen. Dabei könnten im CHECKSUM-Feld Daten gespeichert werden, die das zu übertragende Informationssignal weiter kennzeichnen. Dies könnte z. B. bei einem AES67 kompatiblen Informationssignal angewendet werden, könnte jedoch auch bei Übertragung von anderen Informationssignalen über ein Netzwerk von Nutzen sein.

Die Kodierung in den so zur Verfügung stehenden 16 Bit im CHECKSUM Feld könnte wie folgt aussehen:

Bits 0, 1 (die Bits 48 und 49 in Fig. 5): Übertragungstyp, wie z.B. AES67, TR01, TR03 und SMPTE2110, wobei Tr für "Technical Recommendation" steht.

Bits 2, 3 (die Bits 50 und 51 in Fig. 5): Art der Daten, wie z.B. Audio, Video und Metadaten.

Bit 4 (Bit 52 in Fig. 5): komprimiert ja/nein

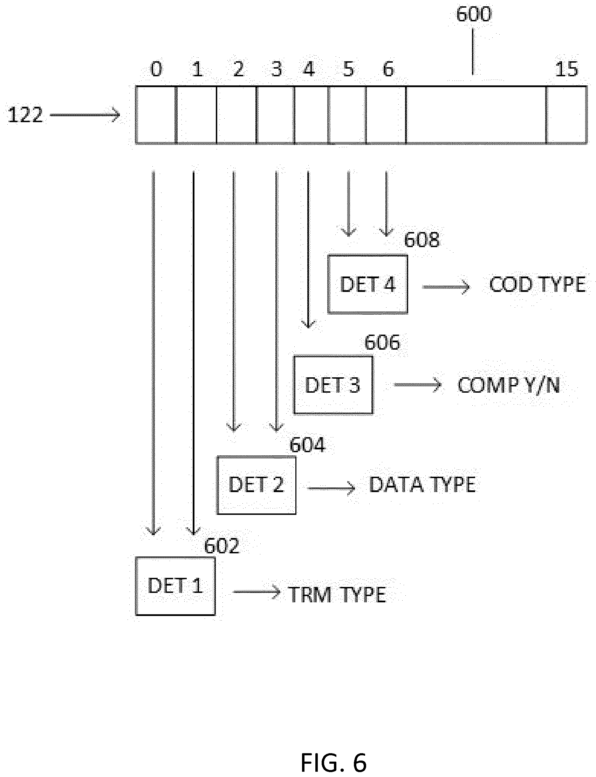

Bit 5, 6 (die Bits 53 und 54 in Fig. 5): Kodierungsart, wie z.B. JPEG2000 und TICO (tiny codec) Fig. 6 zeigt ein Ausführungsbeispiel einer Einrichtung zum Empfangen eines AES67 kompatiblen Informationssignals, das an einem Eingang 122 angeboten wird. Diese Einrichtung enthält ein 16-Bit langes Schieberegister 600, zum Speichern des Inhalts des 16-Bit CHECKSUM-Feldes eines UDP-Headers. Ausgänge der Speicherplätze der Bits 0 und 1 (die Bits 48 und 49 in Fig. 5) werden an eine erste Detektionseinheit 602 zugeführt. Die Detektionseinheit 602 leitet aus den Bitwerten der Bits 0 und 1 den Übertragungstyp TRM TYPE ab. Ausgänge der Speicherplätze der Bits 2 und 3 werden an eine zweite Detektionseinheit 604 zugeführt. Die Detektionseinheit 604 leitet aus den Bitwerten der Bits 2 und 3 (die Bits 50 und 51 in Fig. 5) die Art der übertragenden Daten DATA TYPE ab. Der Ausgang des Speicherplatzes des Bits 4 wird an eine dritte Detektionseinheit 606 zugeführt. Die Detektionseinheit 606 leitet aus dem Bitwert des Bits 4 (das Bit 52 in Fig. 5) ab, ob das Informationssignal komprimiert wurde oder nicht COMP Y/N. Ausgänge der Speicherplätze der Bits 5 und 6 werden an eine vierte Detektionseinheit 608 zugeführt. Die Detektionseinheit 608 leitet aus den Bitwerten der Bits 5 und 6 (die Bits 53 und 54 in Fig. 5) die Kodierungsart COD TYPE ab.

Einrichtung zum Ableiten von signalspezifischen Kennzeichen aus einem seriellen Datenstrom, welcher aus aufeinanderfolgenden IP-Paketen aufgebaut ist, wobei die IP-Pakete einen IP-Header, einen UDP-Header, einen RTP-Header und ein Datenfeld enthalten, wobei die Einrichtung einen Eingang enthält, zum Empfangen des seriellen Datenstroms, wobei im UDP-Header in den IP-Paketen des seriellen Datenstroms ein Checksumfeld vorhanden ist, in dem Kennzeichen über den Inhalt des zu übertragenden seriellen Datenstroms gespeichert sind, und wobei die Einrichtung mit einer Ableitungseinheit zum Ableiten dieser Kennzeichen aus dem Checksumfeld eines IP-Pakets versehen ist.

Diese Kennzeichen können den Inhalt des Datenübertragungssignals, den Übertragungstyp und/oder die Art des Datenübertragungssignals und/oder die Art der Komprimierung und/oder die Kodierungsart angeben. So können wenigstens zwei Bits des Checksumfeldes, vorzugsweise die ersten zwei (Bits 0, 1), folgende Übertragungstypen angeben: AES67, Tr01, Tr03 und SMPTE2110.

Oder es können wenigstens zwei Bits des Checksumfeldes, vorzugsweise die zweiten zwei Bits (Bits 2, 3), folgende Arten der Daten im Datenübertragungssignal angeben: Audio, Video und Metadaten.

Oder, wenigstens ein Bit des Checksumfeldes, vorzugsweise das fünfte Bit (Bit 4), könnte folgende Komprimierungsarten angeben: komprimiert und unkomprimiert. Oder, es könnten wenigstens zwei Bits des Checksumfeldes, vorzugsweise das sechste und siebte Bit (Bits 5, 6), folgende Kodierungsarten angeben: JPEG2000 und TICO. Die Einrichtung könnte dann genauso aussehen wie die Einrichtung in Fig. 6.

## Patentansprüche

1. Verfahren zum Ableiten von Audioparameterwerten aus einem AES67 kompatiblen Audioinformationssignal, welches aus einem seriellen Datenstrom von aufeinanderfolgenden IP-Paketen aufgebaut ist, wobei die IP-Pakete einen IP-Header, einen UDP-Header, einen RTP-Header und ein Datenfeld enthalten, und wobei aus Information, welche in wenigstens zwei RTP-Headern von wenigstens zwei IP-Paketen gespeichert sind, ein Wert N abgeleitet wird, der gleich der Anzahl von Abtastungen pro Kanal ist, die im Datenfeld eines IP-Pakets enthalten sind;

wobei dazu aus dem RTP-Header von zwei IP-Paketen im seriellen Datenstrom je ein Timestamp abgeleitet wird, und der Wert N mittels der Formel N = {TS(j) - TS(i)}/(p+1) berechnet wird, wobei TS(i) und TS(j) gleich die Werte der zwei abgeleiteten Timestamps sind und p die Anzahl der zwischen den zwei IP-Paketen (IP(i), IP(j)) in seriellen Datenstrom liegenden IP-Pakete ist, wobei p eine ganze Zahl grösser gleich Null ist; und

im UDP-Header im AES67 kompatiblen Audioinformationssignal ein Checksumfeld vorhanden ist, in dem Daten über den Inhalt des zu übertragenden Informationssignals gespeichert und aus dem Daten aus dem AES67 kompatiblen Audioinformationssignal abgeleitet werden.

2. Verfahren gemäß Anspruch 1, wobei zum Ableiten der Abtastfrequenz gemessen wird, wie viele IP-Pakete M in einem bestimmten Zeitintervall T empfangen werden, und die Abtastfrequenz hauptsächlich gleich N M/T ist.

3. Verfahren gemäß Anspruch 1, wobei zum Ableiten der Anzahl der Kanäle aus einem UDP-Header eine Länge L, ausgedrückt in Bytes des Datenfeldes des IP-Pakets, abgeleitet wird, und die Anzahl der Kanäle gleich L/N' ist, wobei N' gleich N·k, und k die Länge eines Abtastwerts ist, ausgedrückt in Anzahl von Bytes.

4. Verfahren gemäß Anspruch 1, wobei die Daten über den Inhalt des Audioinformationssignals den Übertragungstyp und/oder die Art der zu übertragenden Daten im Informationssignal und/oder die Art der Komprimierung und/oder die Kodierungsart angeben.

5. Verfahren gemäß Anspruch 4, wobei wenigstens zwei Bits, vorzugsweise die ersten zwei (Bits 0, 1), folgende Übertragungstypen angeben: AES67, Tr01, Tr03 und SMPTE2110.

6. Verfahren gemäß Anspruch 4, wobei wenigstens zwei Bits, vorzugsweise die zweiten zwei Bits (Bits 2, 3), folgende Arten der Daten im zu übertragenden Informationssignal angeben: Audio, Video und Metadaten.

7. Verfahren nach Anspruch 4, wobei wenigstens ein Bit, vorzugsweise das fünfte Bit (Bit 4), folgende Komprimierungsarten angeben: komprimiert und unkomprimiert.

8. Verfahren nach Anspruch 4, wobei wenigstens zwei Bits, vorzugsweise das sechste und siebte Bit (Bits 5, 6), folgende Kodierungsarten angeben: JPEG2000 und TICO.

9. Einrichtung zum Ableiten von Audioparameterwerten aus einem AES67 kompatiblen Audioinformationssignal, welches aus einem seriellen Datenstrom von aufeinanderfolgenden IP-Paketen aufgebaut ist, wobei die IP-Pakete einen IP-Header, einen UDP-Header, einen RTP-Header und ein Datenfeld enthalten, wobei die Einrichtung einen Eingang (122) zum Empfangen des AES67 kompatiblen Audioinformationssignals enthält und wobei die Einrichtung mit einer Ableitungseinheit (400) zum Ableiten von Information aus wenigstens zwei RTP-Headern von wenigstens zwei IP-Paketen im seriellen Datenstrom, und einer Berechnungseinheit (402), zum Ableiten eines Werts N aus dieser Information, versehen ist,

wobei dieser Wert N gleich der Anzahl von Abtastungen pro Kanal ist, die im Datenfeld eines IP-Pakets enthalten sind;
wobei die Ableitungseinheit (400) weiter eingerichtet ist, aus den RTP-Headern von zwei IP-Paketen im seriellen Datenstrom Timestamps abzuleiten und wobei die Berechnungseinheit (402) eingerichtet ist, N gemäß folgender Formel zu berechnen:

$$N = \{TS(j) - TS(i)\}/(p+1),$$

wobei TS(i) und TS(j) gleich der Werte der zwei abgeleiteten Timestamps sind und p gleich der Anzahl der zwischen den zwei IP-Paketen (IP(i), IP(j)) in seriellen Datenstrom liegenden IP-Paketen ist, wobei p eine ganze Zahl grösser gleich Null ist; und
wobei im UDP-Header im AES67 kompatiblen Audioinformationssignal ein Checksumfeld vorhanden ist, in dem Daten über den Inhalt des Audioinformationssignals gespeichert sind, und die Ableitungseinheit (400) zum Ableiten der im Checksumfeld gespeicherten Daten eingerichtet ist.

10. Einrichtung gemäß Anspruch 9, wobei die Einrichtung weiter mit einer Einheit (410, 412) zum Bestimmen der Anzahl M von IP-Paketen, die in einem bestimmten Zeitintervall T empfangen werden, versehen ist, und die Berechnungseinheit (402) weiter eingerichtet ist, eine Berechnung N M/T auszuführen, deren Ergebnis gleich die Abtastfrequenz ist.

11. Einrichtung gemäß Anspruch 9, wobei die Ableitungseinheit (400) weiter eingerichtet ist, aus dem UDP-Header eine Länge L, ausgedrückt in Bytes, des Datenfeldes des IP-Pakets abzuleiten, und weiter mit einer Berechnungseinheit (402) zum Ausführen einer Berechnung L/N', wobei N' gleich N·k, und k die Anzahl der Bytes eines Abtastwerts ist, deren Ergebnis gleich die Anzahl der Kanäle ist, versehen ist.

## Claims

1.  Method for deriving audio parameter values from an AES67 compatible audio information signal, which is composed of a serial data stream of consecutive IP packets, wherein the IP packets contain an IP header, a UDP header, an RTP header and a data field, and wherein from information, which is stored in at least two RTP headers of at least two IP packets, a value N is derived which is equal to the number of samples per channel, which are contained in the data field of an IP packet;

    wherein for this purpose a timestamp is derived from the RTP header of two IP packets in the serial data stream, and the value N is calculated by means of the formula $N = \{TS(j) - TS(i)\}/(p+1)$, wherein TS(i) and TS(j) are equal to the values of the two derived timestamps and p is the number of IP packets lying between the two IP packets (TP(i), IP(j)) in the serial data stream, wherein p is an integer greater than or equal to zero; and
    in the UDP header in the AES67-compatible audio information signal a check environment is present, in which data about the content of the information signal to be transmitted is stored and from which data is derived from the AES67-compatible audio information signal.

2.  Method according to claim 1, wherein for deriving the sampling frequency it is measured how many IP packets M are received in a specific time interval T, and the sampling frequency is mainly equal to N M/T.

3.  Method according to claim 1, wherein for deriving the number of channels from a UDP header a length L, expressed in bytes of the data field of the IP packet is derived, and the number of channels is equal to the L/N', wherein N' is equal to N k, and k is the length of a sampled value, expressed in number of bytes.

4.  Method according to claim 1, wherein the data on the content of the audio information signal indicates the transmission type and/or the type of data to be transmitted in the information signal and/or the type of compression and/or the coding type.

5.  Method according to claim 4, wherein at least two bits, preferably the first two (bits 0, 1), indicate the following transmission types: AES67, Tr01, Tr03 and SMPTE2110.

6.  Method according to claim 4, wherein at least two bits, preferably the second two bits (bits 2, 3), indicate the following types of data in the information signal to be transmitted: audio, video and metadata.

7.  Method according to claim 4, wherein at least one bit, preferably the fifth bit (bit 4), indicates the following compression modes: compressed and uncompressed.

8.  Method according to claim 4, wherein at least two bits, preferably the sixth and seventh bit (bits 5, 6), indicate the following coding types: JPEG2000 and TICO.

9.  Device for deriving audio parameter values from an AES67 compatible audio information signal, which is composed of a serial data stream of successive IP packets, wherein the IP packets contain an IP header, a UDP header, an RTP header and a data field, wherein the device contains an input (122) for receiving the AES67-compatible audio information signal and wherein the device is provided with a derivation unit (400) for deriving information from at least two RTP headers of at least two IP packets in the serial data stream, and a calculation unit (402), for deriving a value N from this information,

    wherein this value N is equal to the number of samples per channel which are contained in the data field of an IP packet;
    wherein the derivation unit (400) is further configured to derive timestamps from the RTP headers of two IP packets in the serial data stream and wherein the calculation unit (402) is configured to calculate N according to the following formula:

    $$N = \{TS(j) - TS(i)\}/(p+1),$$

    wherein TS(i) and TS(j) are equal to the values of the two derived timestamps and p is equal to the number of IP packets lying between the two IP packets (IP(i), IP(j)) in the serial data stream, wherein p is an integer greater than or equal to zero; and
    wherein a check environment is present in the UDP Header in the AES67-compatible audio information signal, in which data about the content of the audio information signal is stored, and the derivation unit (400) is configured for deriving the data stored in the check environment.

10.  Device according to claim 9, wherein the device is further provided with a unit (410, 412) for determining the number M of IP packets, which are received in a certain time interval T, and the calculation unit (402) is further configured to perform a calculation N M/T, whose result is equal to the sampling frequency.

11. Device according to claim 9, wherein the derivation unit (400) is further configured to derive from the UDP header a length L, expressed in bytes, of the data field of the IP packet, and is further provided with a calculation unit (402) for performing a calculation L/N', wherein N' is equal to N k, and k is the number of bytes of a sample value, the result of which is equal to the number of channels.

**Revendications**

1. Procédé pour dériver des valeurs de paramètres audio à partir d'un signal d'information audio compatible AES67, lequel est constitué d'un flux de données en série de paquets IP successifs, dans lequel les paquets IP contiennent un en-tête IP, un en-tête UDP, un en-tête RTP et un champ de données, et dans lequel, à partir d'informations, lesquelles sont enregistrées dans au moins deux en-têtes RTP d'au moins deux paquets IP, une valeur N est dérivée, qui est égale au nombre d'échantillonnages par canal, qui sont contenus dans le champ de données d'un paquet IP ;

   dans lequel un horodatage est dérivé à cet effet de l'en-tête RTP de deux paquets IP dans le flux de données en série et la valeur N est calculée au moyen de la formule N = {TS(j) - TS(i)}/(p+1), dans lequel TS(i) et TS(j) sont égaux aux valeurs des deux horodatages dérivés et p est le nombre de paquets IP se trouvant entre les deux paquets IP (TP(i), IP(j)) dans le flux de données en série, dans lequel p est un nombre entier supérieur ou égal à zéro ; et
   dans l'en-tête UDP du signal d'information audio compatible AES67, un champ de contrôle est présent, dans lequel sont stockées des données relatives au contenu du signal d'information à transmettre et à partir duquel des données sont dérivées du signal d'information audio compatible AES67.

2. Procédé selon la revendication 1, dans lequel est mesuré, pour dériver la fréquence d'échantillonnage, combien de paquets IP M sont reçus dans un intervalle de temps T donné, et la fréquence d'échantillonnage est principalement égale à N M/T.

3. Procédé selon la revendication 1, dans lequel est dérivé, pour dériver le nombre de canaux d'un en-tête UDP, une longueur L, exprimée en octets, du champ de données du paquet IP, et le nombre de canaux est égal à L/N', où N' est égal à N k, et k est la longueur d'une valeur d'échantillonnage, exprimée en nombre d'octets.

4. Procédé selon la revendication 1, dans lequel les données relatives au contenu du signal d'information audio indiquent le type de transmission et/ou le type de données à transmettre dans le signal d'information et/ou le type de compression et/ou le type de codage.

5. Procédé selon la revendication 4, dans lequel au moins deux bits, de préférence les premiers deux (bits 0, 1), indiquent les types de transmission suivants : AES67, Tr0I, Tr03 et SMPTE2110.

6. Procédé selon la revendication 4, dans lequel au moins deux bits, de préférence les seconds deux bits (bits 2, 3), indiquent les types suivants des données dans le signal d'information à transmettre : audio, vidéo et métadonnées.

7. Procédé selon la revendication 4, dans lequel au moins un bit, de préférence le cinquième bit (bit 4), indique les types de compression suivants : compressé et non compressé.

8. Procédé selon la revendication 4, dans lequel au moins deux bits, de préférence les sixième et septième bits (bits 5, 6), indiquent les types de codage suivants : JPEG2000 et TICO.

9. Dispositif pour dériver des valeurs de paramètre audio d'un signal d'information audio compatible AES67, lequel est constitué d'un flux de données en série de paquets IP successifs, dans lequel les paquets IP contiennent un en-tête IP, un en-tête UDP, un en-tête RTP et un champ de données, dans lequel le dispositif contient une entrée (122) pour recevoir le signal d'information audio compatible AES67 et dans lequel le dispositif est pourvu d'une unité de dérivation (400) pour dériver des informations d'au moins deux en-têtes RTP d'au moins deux paquets IP dans le flux de données en série, et d'une unité de calcul (402) pour dériver une valeur N de ces informations,

   dans lequel cette valeur N est égale au nombre d'échantillonnages par canal qui sont contenus dans le champ de données d'un paquet IP ;
   dans lequel l'unité de dérivation (400) est en outre configurée pour dériver des horodatages à partir des en-têtes RTP de deux paquets IP dans le flux de données en série, et dans lequel l'unité de calcul (402) est configurée pour calculer N selon la formule suivante :

   $$N = \{TS(j) - TS(i)\}/(p+1),$$

   où TS(i) et TS(j) sont égaux aux valeurs des deux horodatages dérivés et p est égal au nombre de paquets IP se trouvant entre les deux paquets IP (IP(i), IP(j)) dans le flux de données en série, dans lequel p est un nombre entier supérieur ou égal à zéro ; et

dans lequel un champ de contrôle est présent dans l'en-tête UDP dans le signal d'information audio compatible AES67, dans lequel sont stockées des données relatives au contenu du signal d'information audio, et l'unité de dérivation (400) est configurée pour dériver les données enregistrées dans le champ de contrôle.

10. Dispositif selon la revendication 9, dans lequel le dispositif est en outre pourvu d'une unité (410, 412) pour déterminer le nombre M de paquets IP qui sont reçus dans un intervalle de temps T donné, et l'unité de calcul (402) est en outre configurée pour effectuer un calcul N M/T dont le résultat est égal à la fréquence d'échantillonnage.

11. Dispositif selon la revendication 9, dans lequel l'unité de dérivation (400) est en outre configurée pour dériver de l'en-tête UDP une longueur L, exprimée en octets, du champ de données du paquet IP, et est en outre pourvue d'une unité de calcul (402) pour effectuer un calcul L/N', dans lequel N' est égal à N k, et k est le nombre d'octets d'une valeur d'échantillonnage dont le résultat est égal au nombre de canaux.

FIG. 1

```
v=0
o=- 1311738121 1311738121 IN IP4 192.168.1.1
s=Stage left I/O
c=IN IP4 239.0.0.1/32
t=0 0
m=audio 5004 RTP/AVP 96
i=Channels 1-8
a=rtpmap:96 L24/48000/8
a=recvonly
a=ptime:1
a=ts-refclk:ptp=IEEE1588-2008:39-A7-94-FF-FE-07-CB-D0:domain-nmbr=0
a=mediaclk:direct=963214424
```

FIG. 2

| IP(i-1) | IP(i) | IP(i+1) | IP(i+2) | IP(i+3) | ... | IP(j-1) | IP(j) |

| IP HDR | UDP HDR | RTP HDR | DATA | IP HDR | UDP HDR | RTP HDR | DATA |

| | s(1,1) | s(1,2) | s(2,1) | s(2,2) | s(3,1) | s(3,2) | s(4,1) | s(4,2) | | | s(1,3) | s(1,4) | s(2,3) | s(2,4) | s(3,3) | s(3,4) | s(4,3) | s(4,4) |

TS(i)

TS(i+1)

FIG. 3

FIG. 4

| 0 | 15 16 | 31 32 | 47 48 | 63 |
|---|---|---|---|---|
| Srce Port | Dest Port | Length L' | Checksum | |

500

FIG. 5

FIG. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Nicht-Patentliteratur**

- A heuristic header error recovery scheme for RTP. **SCHMIDT FLORIAN et al.** 2013 10TH ANNUAL CONFERENCE ON WIRELESS ON-DEMAND NETWORK SYSTEMS AND SERVICES (WONS). IEEE, 18. Marz 2013, 186-190